# EUROPEAN PATENT SPECIFICATION

(11) **EP 2 834 152 B1**
(45) Date of publication and mention of the grant of the patent: **07.06.2023**
(21) Application number: 13883346.2
(22) Date of filing: 04.04.2013
(51) Int. Cl.: B64G 1/40, B64C 15/00, B64C 17/10, B64D 33/02, B64D 37/34, B64G 1/14, B64G 1/00, B64C 3/10, B64G 1/58, B64G 1/62

(54) **AN AEROSPACE PLANE SYSTEM**
WELTRAUMFLUGZEUGSYSTEM
SYSTÈME D'AVION AÉROSPATIAL

(30) Priority: 04.04.2012 AU 2012901351
(43) Date of publication of application: 11.02.2015
(73) Proprietor: Commercial Aerospace Plane Pty. Limited, New South Wales 2022 (AU)
(72) Inventor: ALEXANDER, Nic, Bondi Junction, NSW 2022 (AU)
(74) Representative: Potter Clarkson
(86) International application number: PCT/AU2013/000348
(87) International publication number: WO 2014/176622

(56) References cited:
- EP-A1- 0 778 415
- EP-B1- 0 537 933
- EP-B1- 0 537 933
- WO-A1-98/39207
- WO-A1-98/39207
- WO-A1-03/086860
- DE-A1- 2 656 692
- FR-A1- 2 954 275
- US-A- 3 926 389
- US-A1- 2005 051 666
- US-A1- 2010 276 545
- US-A1- 2010 276 545

## Description

### Field of Invention

The present invention relates to an aerospace plane and in particular to a commercial aerospace plane system.

### Background

Airplanes are vehicles capable of flight by way of wings that interact with pressure and airflow to generate lift. Airplanes have been utilised extensively since the 1950's to transport people and goods about the troposphere. An airplane typically includes a body or fuselage, one or more wings intersecting the fuselage, landing gear to assist take off and landing, an engine to provide thrust and a series of stabilisers to assist with control. Further developments have seen airplanes fly non-stop around the world and reach the stratosphere, mesosphere and even the ionosphere.

With the ongoing use of airplanes for transport and the future of space tourism and transport, there is a need for Aerospace planes which have an extreme range when operated as an aeroplane and also as a space plane. Accordingly, there is a need for an "Aerospace plane system". The Space Shuttle being the most famous "Aerospace" plane, being able to orbit the earth while landing like a conventional high descent rate glider without an engine which severely limits its efficiency. There is a need for an Aerospace plane system that is fuel efficient and capable of a global transit (21600 nautical miles - nm) and capable of semi-planetary navigation with a payload that is competitive in the commercial aviation arena. Also, being able to re-enter the earth's atmosphere and being able to operate as a normal airplane and land at a convenient airport for replenishment and relaunch. This is important because the re-entry ranges (hyper and supersonic re-entry areas) maybe some distance from the point where the
passengers may conveniently disembark and freight needs to be delivered. For example, the White Sands missile range and SpacePort in New Mexico, USA is a long way from anywhere. An aerospace plane that can re-enter over White Sands and fly to a useful destination under its own power will be extremely beneficial for space flight passengers and freight.

An aerospace plane system which can launch from any airport on the planet would also be useful. The AeroSpace plane system should be sufficiently efficient to reduce the overall fuel flow to an average of 5.34t/hr at Boeing 777 payloads with beyond Boeing 777 ranges to approximately 11000 nm and arrive at the destination with suitable fuel reserves.

When considering plane efficiencies flight range considerations must be given to the vertical and horizontal stabilizers which are currently utilized in most commercial planes. A downward balancing force is created by a horizontal stabilizer resulting in 'induced and trim' drag adding to the overall weight of the plane. This significantly reduces aircraft range and payload capability for a given fuel load.

The McDonnell MD-11 was designed as a relaxed stability airplane and some jet upsets (unusual flight attitudes) resulted. Jet upsets are extremely undesirable and it is therefore important to both design flight control software and flight control surfaces with sufficient power, CM (Coefficient Moment) and size to overcome these issues.

Present airliners fly in the 33 000' to 39 000' range resulting in higher indicated airspeeds, than aircraft flying at higher levels up to 60 000', which results in much higher fuel usage rates. Therefore more fuel is required to fly a specific distance, this increases costs, limits range and reduces payload/revenue. To achieve lower fuel flows a diversion from traditional commercial airplane shapes is desirable so that a majority of the flight is conducted with the AC (aerodynamic centre) forward of CG (centre of gravity) and therefore CG management is required to achieve this.

There is also a need to design an aerospace plane capable of flying extreme ranges and carry more payload per unit of fuel used.

Also current airplanes require at least two crew members to operate a plane where up to six pilots (as relief crew) may be required to fly extreme ranges to comply with Federal Aviation Regulations (FARs). This increases airplane operating costs by requiring more crew to operate a fleet of airplanes. Accordingly, there is a need to design an aerospace plane to be operated by one crew member only thereby reducing labor costs therefore requiring fewer relief crew for extreme range operations.

WO 03/086860 describes an aerospace plane capable of horizontal take-off and landing, equipped with air-breathing turbofan engines suitable for operation on standard jet fuel, and a liquid oxygen generation system for generating LOX fuel during flight for the rocket engine to lift the aerospace plane to higher altitude. The turbofan engines can be shut down and the inlets covered during rocket engine firing.

WO98/39207 discloses a reusable rocket airplane (10) which may be utilized to launch satellites (26) and other payloads into space. The airplane may also be used for rapid surface to surface flight. The reusable rocket airplane (10) may be safely supplied with oxidizer in mid-air from a tanker (32), achieve an altitude outside the Earth's atmosphere, and return safely to be used again. The rocket airplane includes inlets (36) to gas turbine engines which are covered (12, 14) for high speed flight. Provision is also made for minimizing fluid spillage during mid-air oxidizer transfer from tanker (32).

### Object of Invention

It is an object of the present invention to substantially overcome or at least ameliorate one or more of the disadvantages of the prior art, or to at least provide a useful alternative.

### Summary of Invention

The invention provides an aerospace plane according to claim 1. Embodiments thereof are defined by the dependent claims.

### Description of Drawings

A preferred embodiment of the present invention will now be described, by way of an example only, with reference to the accompanying drawings wherein:
Figure 1 is a top view of the extreme range aerospace plane variant of an embodiment of the present invention, capable of operating up to 60 000';

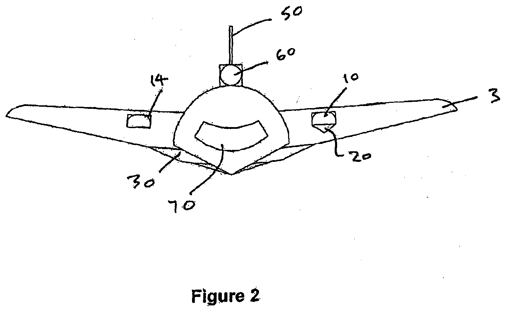

Figure 2 is a front view of Figure 1;

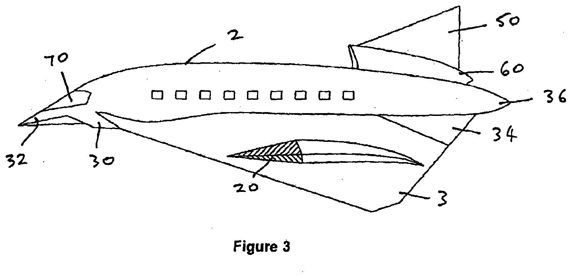

Figure 3 is a side view of Figure 1;

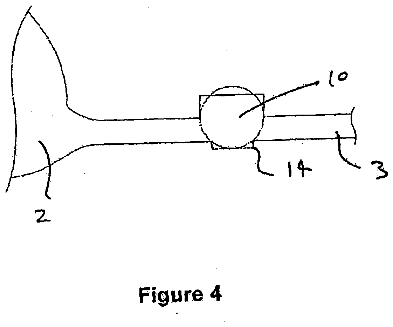

Figure 4 is a part view of a wing of Figure 1;
Figure 5 is an example of light refraction that is not claimed;
Figure 6 is a part view of a wing of Figure 1 engine intake door open;
Figure 7 is a part view of a wing of Figure 1 engine intake door closed;
Figure 8 is a further part view of a wing of Figure 1 engine intake door and pressure doors closed;
Figure 9 is a part view of an electrical power plant powered by Reaction Control System (RCS) gas in order to power Hall Effect Thrusters for the suborbital phase;
Figure 10 is a cross-section of a fuel system heater; and
Figure 11 is a rear view of a re-entry braking system.

### Description of Embodiments

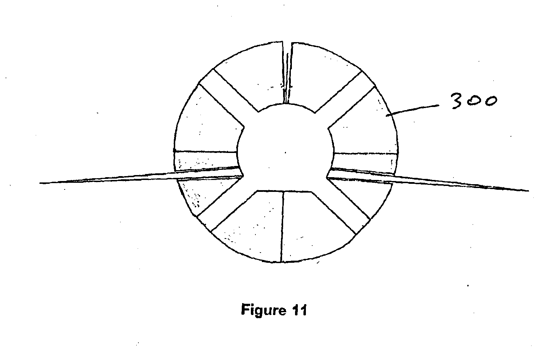

There is disclosed in the drawings an aerospace plane 1 having an elongate body 2 supporting a pair of wings 3. The wings 3 are adapted to extend away from the body 2 in opposing directions. A landing gear assembly (not shown) is operatively associated with the body 2 to be movable from a retracted position where the assembly is substantially locatable within the body 2 and an extended position where the assembly extends at least partially away from the body 2. The aerospace plane 1 includes at least one engine 10 adapted to generate thrust. At least one stabilizer is included and adapted to assist with movement and thereby flight of the aerospace plane 1. The at least one engine 10 is located at least partially within an intake housing 14 to direct air into the at least one engine 10. The intake housing 14 has at least one door portion 20 to open or close the intake housing 14 to moderate the amount of air flowing into the intake housing 14 and thereby the engine 10. There are two variants one which operates below 60000' has three engines for example. The second, suborbital variant has 2 jet engines one in each wing to climb to say 35000' engage solid rocket booster/s and then operate in space with Hall Effect Thrusters to complete the trajectory. This variant will re-enter maintaining re-entry temperatures to safe limits by deploying a suitably large speed brake (Figure 11). The pilots will then relight the 2 engines on this variant and fly to a suitable destination unlike the shuttle which does not incorporate air breathing engines and therefore has to land immediately after re-entry being unable to fly to a more suitable location. The aerospace plane 1 in the preferred form is capable of space flight and circumnavigation of the planet. The aerospace plane 1 therefore includes an engine 10 and corresponding intake housing 14 located on each wing 3. The aerospace plane 1 stabilizers include a pair of elevons 30 at a front end 32 of the body 2 and a pair of stabilons 34 at a rear end 36 of the body 2. The aerospace plane 1 further includes a tail 50 extending away from the rear end 36 of the body 2. The tail 50 could also include a further engine 10 which could also include a corresponding intake housing and door portion.

The aerospace plane therefore can include engine shut down throughout the flight profile. The low drag engine intake door portions 20 can extend to cover the engine intake 14 to reduce drag. The intake doors 20 are discussed further later. This ensures that sufficient engine power is available for both take off in the available field length and then climb to cruise altitude. If one or multiple engines 10 can be shutdown and covered with the low drag intake doors 20 then this will reduce overall fuel flow. Engine intake doors 20 and overall engine 10 structure would also produce lift ameliorating the weight of the engines 10.

The aerospace plane can also include multi axis vectored engine thrust technology so that the very large (heavy) vertical and horizontal tail stabilizer surfaces (empennage) used for stability and yaw damping are integrated into the main wing 3 or a smaller control surface may be used (not shown). Another benefit of multi-axis vectored thrust engines 10 is that heavy hydraulic and backup power systems for `roll' flight controls become redundant thereby reducing the overall weight and complexity of the aerospace plane 1 making more space available in the outer wing 3 for fuel and reduced overall weight resulting in increased payload. Further efficiency gains could be achieved by the ability to move the aerospace planes centre of gravity (CG) through a large range to achieve Aerodynamic Center (AC) and CG coincident to achieve relaxed stability which reduces "induced and trim" drag coefficient significantly reducing fuel consumption. Higher cruise altitudes (above Flight Level [FL] 500 or 50,000') may be achieved by further reducing drag with lower airspeeds and the facility to cruise at higher mach numbers of M0.95 at Indicated Airspeed (IAS) of 185 knots to 210 knots. Thereby reducing the overall flight time and further reducing fuel consumption for a given distance. Variable CG also allows for higher lift forward fuselage profiles (present airplanes do not have high lift forward fuselage) to further enhance the aerospace planes 1 efficiencies in range, payload and lower fuel consumption. Also, flight at higher mach numbers (than present commercial aircraft) results in reduced flight times resulting in maximizing daily usage of aerospace plane assets. The aerospace plane 1 will be designed for single pilot operations located in a cockpit 70 reducing pilot manning and training costs.

Landing gear electric traction motors (not shown) could be utilised to further reduce fuel usage before takeoff, after landing and also reducing jet blast during ground operations.

The aerospace plane would be about 75m in length by about 65m wide and have a body of about 6:2m in radius. The aerospace plane 1 would include a 3 engine configuration for adequate take off performance; adequate climb performance to achieve final cruise altitude early in the flight profile; and no intermediate level off altitudes before arriving at final cruise altitude. An example for managing cruise profile to achieve very low fuel flow figures at final cruise altitude:
3 Engine cruise - 20% beginning of flight;
2 Engine cruise - 20% mid flight;
1 Engine cruise - 60% end flight.

Global fuel consumption figures for circumnavigation: a. Global Circumference 22 000 nm; b. 500 knot ground speed cruise; c. 250 tonnes of fuel; d. 15 tonnes reserve; e. 44 hrs flight time at 500kt ground speed; f. 235 tonnes / 44 hrs = 5.34 t/hr.

An AeroSpace plane 1 with:
a, low enough fuel consumption for global circumnavigation (no payload);
b. B777 size cabin and B777 size payload capacity, and
c. a 737 PCN (Pavement Classification Number) increases the number of airfields at which the aerospace plane 1 can land. This is a significant advantage over existing commercial airplanes of this size and weight.

The aerospace plane could include a one button push control (not shown) for PreFlight preparation, to support single pilot operations. This could include a sequence of
a. Auto wind uplink for Flight Plan (FPLN) assessment negating the requirement for companies to provide briefing and flight planning offices and staff to man these facilities;
b. Auto upload digital Automatic Terminal Information Service (ATIS) fields on to Performance Calculation page;
c. Air Traffic Control FPLN submission from aircraft.

The aerospace plane 1 would also include auto deployable onboard wind vanes (not shown), providing wind speed and direction, for autonomous automatic take off performance calculation, thereby reducing pilot workload when operated by a single pilot. That is; wind speed and direction adjusted for taxi track and ground speed and temperature and pressure input from onboard systems.

The disclosure provides methods of drag reduction such as:
a. fly above 50 000' at lower airspeed and high Mach number;
b. Aerodynamic Centre (AC) coincident or forward of Centre Gravity (CG) ensures the stabilon 34 (horizontal stabiliser and aileron) is set in an optimum lift/minimum drag position.

Reduced vertical stabilizer height or no vertical stabilizer using vectored thrust for yaw stability and engine inoperative operations would reduce weight and drag reducing fuel required increasing payload and revenue.

The single pilot cockpit 70 design for single pilot flight provides an aerospace plane 1 that can be:
a. Capable of single pilot operation capable for takeoff and landing; and
b. Therefore, only 4 crew required on extreme range flights in excess of 20hrs.

It would also be advantageous if the aerospace plane 1 included electric traction landing gear motors (not shown) powered by an Auxiliary Power Unit (APU) on the ground before engine 10 start. This will help:
a. taxi with engines 10 shutdown for fuel saving;
b. To spin wheels (not shown) up before touchdown reducing wheel wear and tear at touchdown thereby reducing wheel damages;
c. Wheel spin up before touchdown prevents hydroplaning in adverse weather conditions enhancing safety; and
d. Reduce ground handling jet blast issues enhancing safety.

The aerospace plane provides enhanced aircraft autonomy requiring minimal ground support and reducing ground handling expenses such as anti-icing and de-icing costs. This can be achieved by:
a. Pre-heating the fuel before aircraft refuelling for autonomous de-icing/anti-ice on the ground;
b. Directing cabin conditioned air and engine bleed air into the wing 3 space to ensure the aerospace plane's skin is at or above 10°C to de-ice and anti-ice the aerospace plane 1;
c. Internally heated fuel - the fuel transfer system (not shown) distributes heated fuel against the wing 3 upper surface for de-icing;
d. Fuel tanks (not shown) are pressurized to cabin differential to ensure fuel remains above fuel freeze point;
e. Fuel tank pressure differential for fuel transfer to ensure rapid aerospace plane CG management;
f. Fuel transfer valves designed for efficient fuel transfer for CG management, and
g. Wing space/ducting to allow the free flow of cabin outflow air for heating fuel during high altitude flight.

The aerospace plane 1 could also include air suspension engine mounts (not shown) for passenger cabin noise and vibration reduction.

Soft switches (Graphic User Interface - GUI) and switch execution in checklists would be integrated into Cockpit Engine Warning Displays (EWD), Systems Displays (SD), and into Multi Function Displays (not shown) to minimize physical switches on instrument, centre and overhead panels.

The optimum AC, CG relationship for the AeroSpace plane 1, is relaxed stability or the AC forward of or coincident with CG. The AC aft or behind CG is counterproductive in terms or aerodynamic efficiency but the aerospace plane 1 is capable of flying in this regime.

In flight, the centre of gravity (CG) is positioned slightly aft of aerodynamic centre (AC) to ensure the stabilon 34, multi-axis thrust technology and the forward elevon 30 (integrated into the leading edge extension [LEX]) are in the minimum drag/optimum lift position. The benefit of AC coincident with CG is that the whole aircraft 1 is a lifting body as opposed to the standard aircraft. For example in the Airbus A380 the horizontal stabilizer is creating a 'downward balancing force'. The resulting benefit of a relaxed stability aerospace plane 1 is significantly less 'drag', increased payload and range due to reduced fuel consumption and less fuel required for a given distance and payload.

Elevons 30 are incorporated into the Leading Edge Extensions (LEX) and stabilons 34 in the tail 50 of the aerospace plane 1 to assist efficiencies.

Positioning the elevon 30 forward integrated into the LEX will result in a Coefficient Moment (CM) sufficient to manage an AC forward of CG and makes the aircraft pilot flyable in event of direct flight control law requirement. Direct flight control law is where the pilot flight control inputs are not modified by computer software.

The fuel transfer proposed to manage CG will establish the stabilon 34 position to produce optimum lift and minimum drag. The following sequence for example will result in optimum aerospace plane lift configuration:
a. The elavon 30, LEX and forward fuselage 2 produce lift;
b. Fuel is positioned by differential air pressure between fuel tanks provided by cabin outflow air or by fuel pumps to optimize the CG position;
c. Multi-axis vectored thrust will also have a slight nose down CM (Coefficient Moment) to maximize lift;
d. This sets the optimum (optimum lift, minimum drag) stabilon 34 position;

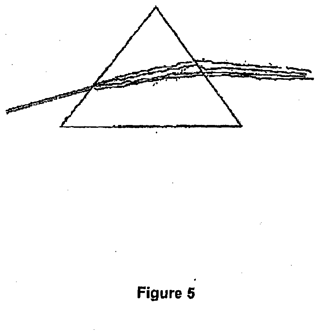

The aerospace plane according to a non-claimed example also includes optimum flight control sensor signals having:
a. a light frequency generator and sensor Figure 5 which will measure the optimum flight control position and this will be the datum around which signals are sent for the optimum fuel CG position;
b. Predictive CG positioning for phase of flight profile speeds will be utilized. For example, in the event of accelerating supersonic the fuel/CG is transferred aft in anticipation of the AC moving aft with the shock wave to ensure optimum flight control positioning.

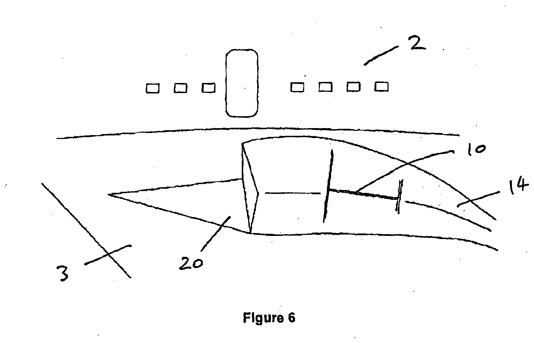

As best seen in Figures 6 to 8, the Engines 10 are fitted with retractable engine intake doors 20 in the shape of a wing cross section or the like to provide lift when the engine is shutdown and the engine intake door 20 is closed.

The aerospace plane jet intakes 14 in a preferred form will be rectangular or similar shape to simplify intake door retraction and facilitate intake door seals (not shown). Engine intake doors 20 allow for engine 10 shut down inflight to reduce fuel flow. The 3 engine configuration for an aircraft this size which would normally only require 2 engines. This also helps with:
a. take off performance requires sufficient thrust (all engines 10 operating) for takeoff in a given runway length and climb to a higher altitude FL 600; and
b. engine intake doors 20 are closed and engines 10 secured/shutdown when established at the final cruise level (covering the engine intake) producing lift and reducing fuel flow to achieve extreme range operations and increased payload due to less fuel required.

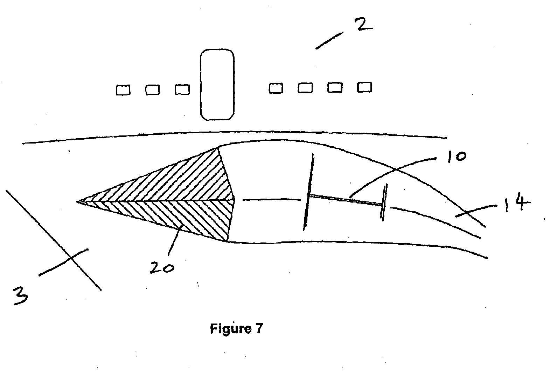

Figure 6 is a side view of the engine 10 with intake doors 20 stowed, engine intake open. Figure 7 is side view of the engine 10 with engine intake doors 20 closed.

The primary operating technique is to operate on one (center) engine 10 for a major part of the flight to minimise fuel burn. This is known as one engine cruise. The AC remains in approximately the same position with the engines 10 running or shutdown with engine intake doors 20 closed. Therefore, jet engine intake through exhaust will follow a wing camber that produces equal lift at cruise thrust as with the intake and exhaust doors 20 closed to minimise the movement of fuel to manage CG position.

In a preferred form the engines would shutdown at high altitude for prolonged periods and can reach a static air temperature (SAT) of -57°C. As cold can result in failure to relight due to engine 10 cold soak, there is a danger the engines may not relight.

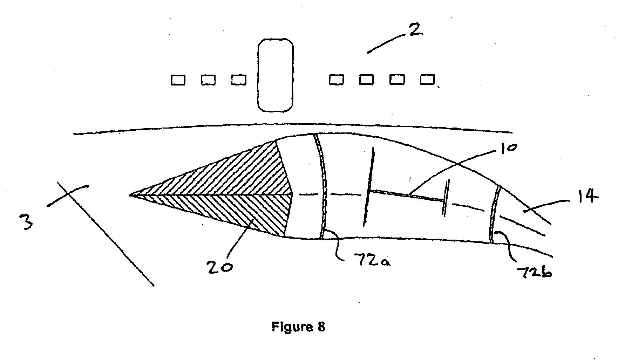

Engine compartment pressurisation from cabin air outflow using engine pressure doors 72 (as best seen in Figure 8) will prevent engine cold soak ensuring successful engine relights. Also as the engines 10 are fitted with retractable engine intake doors 20 in the shape of a wing cross section or the like they provide lift when the engine intake door 20 is closed. In particular:
a. Forward pressure door 72a (inside engine air intake 14) swings forward and is held in place by the pressure differential from cabin outflow air;
b. The aft engine pressure door 72b swings forward (inside engine exhaust 14) and locks in place using the same plug mechanism as a cabin entry/exit door 80 and is held in place by the differential air pressure;
c. Cabin outflow air is routed to pressurize the engine bay to maintain the engine temperature at approximately 23°C to prevent engine cold soak ensuring an in flight start for landing.

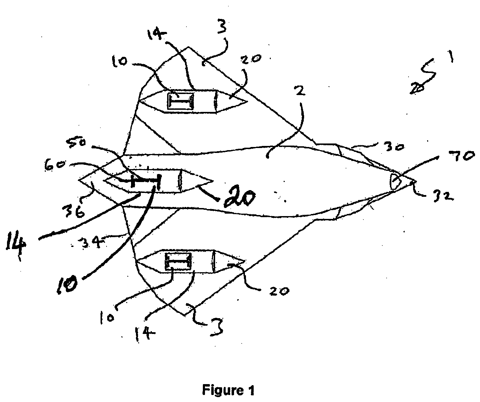

As seen in at least Figure 1 a delta wing shape is preferred. Such a shape is important to facilitate fuel transfer/positioning for CG management, engine and engine intake door incorporation. Multi Axis vectored thrust reduces the requirement for heavy and space consuming hydraulic and backup flight control systems in wing outspan, reducing aerospace plane complexity and weight making space available for fuel and therefore an increased payload.

The aerospace plane can also include an enhanced cargo handling system allowing fast freight loading through rear facing cargo access door/ramp (not shown).

The outboard engines 10 are pointed slightly inboard to facilitate one engine (OEC) asymmetric cruise and balanced flight in event of a vectored thrust failure. There would also be active yaw stabilization. The multi axis thrust vectors provide a slight low frequency yaw oscillation. Active yaw input as opposed to reactive yaw damping is preferred.

The aerospace plane can also include landing gear strut weight sensors (not shown) to provide data to position fuel for optimum CG at takeoff.

Potable (Stainless Steel) water tanks (not shown) can surround each engine 10 for aircraft protection and wing fuel tank/engine isolation (in the event of catastrophic engine failure).

When the aerospace plane 1 is to enter space flight a Solid Rocket Booster (SRB) and an Argon ion accelerator rocket (Hall Effect Thrusters) or the like (not shown) could be used to launch to orbit and space transit.

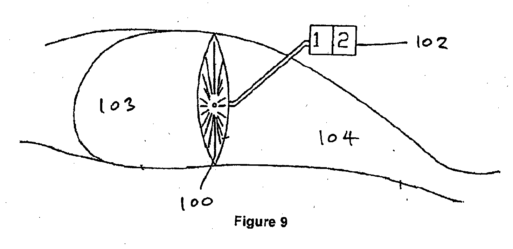

As shown in Figure 9, a turbine 100 is connected to a generator 102 and has an expansion chamber 103 and an exhaust vent 104 forming a Reaction Control System (RCS) exhaust. This will power the Argon ion accelerator rocket. This launch method will reduce launch costs; lower operating costs because launch systems are retained onboard for return to base for replenishment.

It is known that extreme cold in space requires jet fuel temperature maintained above freezing, Fuel will be stored in the fuselage centre wing tank of the aerospace plane, pressurised and maintained at cabin temperature. A separate jet fuel pressurised accumulator (similar to a hydraulic accumulator, not shown) will ensure the jet fuel tank remains full, ameliorating the effects of weightlessness and bubble formation in jet fuel.

A solid rocket boost (SRB) could also be employed at launch the plane 1 in conjunction with an accelerator rocket or a chemical rocket.

It is proposed that the aerospace plane 1 fuel is pre-heated before takeoff. This prevents fuel freeze in space; pre-heated fuel assists in cabin environmental control by using a fuel/air heat exchanger; hydrogen fuel cells in jet fuel tanks provide power:
i. for the jet fuel heater element;
ii. to CO₂ scrubber and environmental systems;
iii. aerospace plane systems;

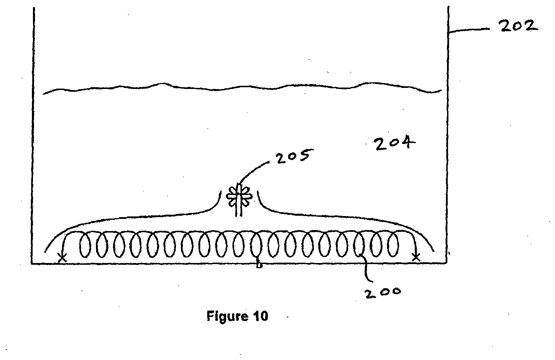

A heating element 200 as best seen in Figure 10 is incorporated in the jet fuel tank 202 to keep fuel 204 at a temperature above freezing, in both variants. The engine bay is pressurised to cabin differential pressure by cabin air for the space phase. Fuel heated by the electric element 200 is distributed by single or contra-rotating propeller 205 to ensure homogenous fuel temperature. Cabin heating is achieved by pumping heated fuel through a fuel/air heat exchanger.

The re-entry flight control Figure 11 and re-entry speed brake system 300 provides pitch, roll and yaw control.

The aerospace plane 1 could also be used as a long range strategic strike aerospace plane. This aerospace plane is fitted with forward, side and aft air defence radars for 360° coverage; a long and medium range radar guided and heat seeking air to air missiles, capable of firing forward and aft; the capability to carry large and diverse precision guided air to ground munitions.

Such a plane would be capable of operating both as a UAV (Unmanned Aerial Vehicle) and a manned aerospace plane. The aerospace plane 1 will have approximately 24/7 airborne endurance with approximately 24 hrs between aerial refuelling. For example, the airborne refueller will fly formation below and behind the aerospace plane 1. The aerospace plane will deploy a drogue or boom refuelling system to the trailing refuel aerospace plane for the inflight refuelling. The UAV aerospace plane 1 will also be capable of flying formation on an airborne refuel tanker to minimize refuelling time. The aerospace plane will also have an orbital military variant.

A suborbital variant of the space plane 1 would employ a three phase propulsion system and will launch conventionally on two engines, accelerate using an SRB Solid Rocket Booster and when appropriate engage a VASIMR (Variable Specific Impulse Magneto Rocket) cluster with sufficient specific impulse to complete the flight phase to destination.

For the space phase a VASIMR is proposed with a turbine powered by Reaction Control System (RCS) fuel connected to a generator to provide energy.

Re-entry heat will be managed by TPS (Thermal Protection System). This prevents fuel freeze in space. The RCS power generator will store energy in a hydraulic accumulator to power a hydro-drive generator for sub-orbital aerospace plane power, supplementing fuel cell power supply. Cabin heating is achieved by pumping heated fuel through a fuel/air heat exchanger. Hydrogen fuel cells provide power: a. to heat jet fuel; b. to CO₂ scrubber; and c. control systems.

Re-entry compression intake/s, provide Ram Air Turbine energy; powering and supplementing; the re-entry RCS flight control system, and flight control/deceleration (speed brake) system. The re-entry flight control system provides pitch, roll and yaw control. Routes air to an expansion tank distributing conditioned (cooling) air through ducting to internal space next to the TPS (thermal protection system), venting hot air overboard.

## Claims

1. An aerospace plane (1) having:
an elongate body (2) supporting a pair of wings (3), said wings being adapted to extend away from said body in opposing directions;
a landing gear assembly operatively associated with said body to be moveable from a retracted position where said assembly is substantially locatable within said body and an extended position where said assembly extends at least partially away from said body; and
at least one stabilizer adapted to assist with movement of said aerospace plane (1);
a tail assembly (50), said tail assembly including one or more of the at least one stabilizer; and
at least one engine (10) adapted to generate thrust,
wherein said at least one engine (10) is located at least partially within an intake housing (14) to direct air into said at least one engine, said intake housing having at least one door portion (20) to open or close the intake housing to moderate the amount of air flowing into said intake housing and thereby said engine, the at least one door portion (20) being configured to cover the intake housing (14) to reduce drag when the engine is shut down.

2. The aerospace plane according to claim 1 including means for optimising the centre of gravity position by fuel transfer between fuel tanks of said aerospace plane (1).

3. The aerospace plane according to claim 1, wherein said pair of wings includes a "delta" wing shape.

4. The aerospace plane according to claim 1, wherein said at least one engine includes one or more pressure doors (72) adapted to maintain engine temperature when shut down in flight.

5. The aerospace plane according to claim 1, including means (200) to heat fuel (204) within said aerospace plane (1), said fuel in use being distributed about at least one said wing (3) to inhibit aerospace plane icing for autonomous ground deicing ameliorating the requirement for deicing vehicles and operators.

6. The aerospace plane according to claim 1, wherein at least one stabilizer includes one or more elevons (30) incorporated into a leading edge extension of at least one said wings.

7. The aerospace plane according to claim 1, wherein the aerospace plane (1) includes a pair of elevons (30) at a front end (32) of said body and a pair of stabilons (34) at a rear end (36) of said body, wherein a stabilon is a horizontal stabiliser and aileron.

8. The aerospace plane according to claim 1, wherein said tail (50) extends away from a rear end of said body.

9. The aerospace plane according to claim 1, wherein an upper rear fuselage of said body includes an engine or pair of engines.

10. The aerospace plane according to claim 2 4- in which the fuel is positioned by differential air pressure between the fuel tanks provided by cabin outflow air, or by fuel pumps.

## Patentansprüche

1. Luft- und Raumfahrtflugzeug (1) das Folgendes aufweist:
einen länglichen Körper (2), der ein Paar Tragflächen (3) trägt, wobei die Tragflächen angepasst sind, sich von dem Körper weg in entgegengesetzte Richtungen zu erstrecken;
eine Fahrwerkanordnung, die mit dem Körper wirkverbunden ist, um aus einer eingefahrenen Position, in der sich die Anordnung im Wesentlichen innerhalb des Körpers befinden kann, und einer ausgefahrenen Position, in der sich die Anordnung wenigstens teilweise von dem Körper weg erstreckt, bewegbar zu sein; und
wenigstens eine Höhenflosse, die angepasst ist, um bei einer Bewegung des Luft- und Raumfahrtflugzeugs (1) zu unterstützen;
eine Heckanordnung (50), wobei das Heck eine oder mehrere der wenigstens einen Höhenflosse beinhaltet; und
wenigstens ein Triebwerk (10), das angepasst ist, um Schub zu erzeugen,
wobei sich das wenigstens eine Triebwerk (10) wenigstens teilweise innerhalb eines Einlassgehäuses (14) befindet, um Luft in das wenigstens eine Triebwerk zu leiten, wobei das Einlassgehäuse wenigstens einen Türabschnitt (20) aufweist, um das Einlassgehäuse zu öffnen oder zu schließen, um die Luftmenge zu mäßigen, die in das Einlassgehäuse und dadurch in das Triebwerk strömt, wobei der wenigstens eine Türabschnitt (20) konfiguriert ist, um das Einlassgehäuse (14) abzudecken, um einen Widerstand zu verringern, wenn das Triebwerk abgeschaltet ist.

2. Luft- und Raumfahrtflugzeug nach Anspruch 1, das Mittel zum Optimieren der Schwerpunktposition durch einen Kraftstofftransfer zwischen Kraftstofftanks des Luft- und Raumfahrtflugzeugs (1) beinhaltet.

3. Luft- und Raumfahrtflugzeug nach Anspruch 1, wobei das Paar Tragflächen eine "Delta"-Tragflächenform beinhaltet.

4. Luft- und Raumfahrtflugzeug nach Anspruch 1, wobei das wenigstens eine Triebwerk (10) eine oder mehrere Drucktüren (72) beinhaltet, die angepasst sind, um eine Triebwerkstemperatur aufrechtzuerhalten, wenn es während des Fluges abgeschaltet wird.

5. Luft- und Raumfahrtflugzeug nach Anspruch 1, das Mittel (200) beinhaltet, um Treibstoff (204) innerhalb des Luft- und Raumfahrtflugzeugs (1) zu erwärmen, wobei der Treibstoff in Verwendung um wenigstens eine der Tragflächen (3) herum verteilt wird, um eine Vereisung des Luft- und Raumfahrtflugzeugs für ein autonomes Enteisen am Boden zu verhindern, wobei die Anforderungen an die Enteisung von Fahrzeugen und Betreiber verbessert werden.

6. Luft- und Raumfahrtflugzeug nach Anspruch 1, wobei wenigstens eine Höhenflosse ein oder mehrere Elevons (30) beinhaltet, die in eine Vorderkantenverlängerung wenigstens einer der Tragflächen eingebaut sind.

7. Luft- und Raumfahrtflugzeug nach Anspruch 1, wobei das Luft- und Raumfahrtflugzeug (1) ein Paar Elevons (30) an einem vorderen Ende (32) des Körpers und ein Paar Stabilons (34) an einem hinteren Ende (36) des Körpers beinhaltet, wobei ein Stabilen eine horizontale Höhenflosse und ein Querruder ist.

8. Luft- und Raumfahrtflugzeug nach Anspruch 1, wobei sich das Heck (50) von einem hinteren Ende des Körpers weg erstreckt.

9. Luft- und Raumfahrtflugzeug nach Anspruch 1, wobei ein oberer hinterer Rumpf des Körpers ein Triebwerk oder ein Paar Triebwerke beinhaltet.

10. Luft- und Raumfahrtflugzeug nach Anspruch 2, bei dem der Kraftstoff durch Differenzluftdruck zwischen den Kraftstofftanks positioniert wird, der durch Kabinenabluft oder durch Kraftstoffpumpen bereitgestellt wird.

## Revendications

1. Avion aérospatial (1) ayant :
un corps allongé (2) supportant une paire d'ailes (3), lesdites ailes étant adaptées pour s'éloigner dudit corps dans des directions opposées ;
un ensemble de train d'atterrissage fonctionnellement associé audit corps pour pouvoir être déplacé d'une position rétractée où ledit ensemble est sensiblement localisable à l'intérieur dudit corps et d'une position déployée où ledit ensemble s'étend au moins partiellement à l'écart dudit corps ; et
au moins un stabilisateur adapté pour assister le mouvement dudit avion aérospatial (1) ;
un ensemble de queue (50), ledit ensemble de queue comportant un ou plusieurs de l'au moins un stabilisateur ; et
au moins un moteur (10) adapté pour générer de la poussée,
dans lequel ledit au moins un moteur (10) est situé au moins partiellement à l'intérieur d'un logement d'admission (14) pour diriger l'air dans ledit au moins un moteur, ledit logement d'admission ayant au moins une partie de porte (20) pour ouvrir ou fermer le logement d'admission afin de modérer la quantité d'air circulant dans ledit logement d'admission et ainsi dans ledit moteur, l'au moins une partie de porte (20) étant conçue pour recouvrir le logement d'admission (14) afin de réduire la traînée lorsque le moteur est arrêté.

2. Avion aérospatial selon la revendication 1, comportant un moyen pour optimiser la position du centre de gravité par transfert de carburant entre les réservoirs de carburant dudit avion aérospatial (1).

3. Avion aérospatial selon la revendication 1, dans lequel ladite paire d'ailes comporte une forme d'aile "delta".

4. Avion aérospatial selon la revendication 1, dans lequel ledit au moins un moteur (10) comporte une ou plusieurs portes de pression (72) adaptées pour maintenir la température du moteur lorsqu'il est arrêté en vol.

5. Avion aérospatial selon la revendication 1, comportant un moyen (200) pour chauffer le carburant (204) à l'intérieur dudit avion aérospatial (1), ledit carburant utilisé étant distribué autour d'au moins une dite aile (3) afin d'inhiber le givrage de l'avion aérospatial pour un dégivrage au sol autonome améliorant l'exigence de dégivrage des véhicules et des opérateurs.

6. Avion aérospatial selon la revendication 1, dans lequel au moins un stabilisateur comporte un ou plusieurs élevons (30) incorporés dans une extension de bord d'attaque d'au moins une desdites ailes.

7. Avion aérospatial selon la revendication 1, dans lequel l'avion aérospatial (1) comporte une paire d'élevons (30) à une extrémité avant (32) dudit corps et une paire de stabilons (34) à une extrémité arrière (36) dudit corps, un stabilon étant un stabilisateur horizontal et un aileron.

8. Avion aérospatial selon la revendication 1, dans lequel ladite queue (50) s'étend à l'opposé d'une extrémité arrière dudit corps.

9. Avion aérospatial selon la revendication 1, dans lequel un fuselage arrière supérieur dudit corps comporte un moteur ou une paire de moteurs.

10. Avion aérospatial selon la revendication 2, dans lequel le carburant est positionné par pression d'air différentielle entre les réservoirs de carburant fournis par l'air sortant de la cabine, ou par des pompes à carburant.
